# EUROPÄISCHE PATENTSCHRIFT

(11) **EP 3 880 499 B1**
(45) Veröffentlichungstag und Bekanntmachung des Hinweises auf die Patenterteilung: **14.02.2024**
(21) Anmeldenummer: 19794435.8
(22) Anmeldetag: 14.10.2019
(51) Int. Cl.: B60G 21/055, F16D 43/21

(54) **KUPPLUNGSEINRICHTUNG FÜR EINEN FAHRWERKSAKTUATOR UND FAHRWERKSAKTUATOR**
CLUTCH DEVICE FOR A CHASSIS ACTUATOR, AND CHASSIS ACTUATOR
DISPOSITIF D'ACCOUPLEMENT POUR UN ACTIONNEUR DE CHÂSSIS ET ACTIONNEUR DE CHÂSSIS

(30) Priorität: 14.11.2018 DE 102018219442
(43) Veröffentlichungstag der Anmeldung: 22.09.2021
(73) Patentinhaber: ZF Friedrichshafen AG, 88046 Friedrichshafen (DE)
(72) Erfinder: KERNEBECK, Bernd, 49152 Bad Essen (DE); SCHWARZE, Rene, 49434 Vörden (DE)
(74) Vertreter: ZF Friedrichshafen AG
(86) Internationale Anmeldenummer: PCT/EP2019/077697
(87) Internationale Veröffentlichungsnummer: WO 2020/099043

(56) Entgegenhaltungen:
- EP-B1- 3 156 271
- DE-A1- 2 708 966
- DE-A1- 3 830 243
- DE-A1-102004 004 931
- DE-A1-102009 045 619
- DE-A1-102009 054 671

## Beschreibung

Die Erfindung betrifft einen Fahrwerksaktuator für einen verstellbaren Wankstabilisator eines Kraftfahrzeugs gemäß Anspruch 1.

In der Fahrzeugtechnik, insbesondere der Fahrwerkstechnik ist es für sich gesehen bekannt, Fahrzeuge mit einem sogenannten Wankstabilisator auszustatten, um die dynamische Fahrzeugstabilität sowie den Fahrkomfort zu steigern. In einfachster Ausführung handelt es sich hierbei um eine im Wesentlichen C-förmige Drehstabfeder, die im mittigen Bereich drehbar gegenüber der Karosserie gelagert ist und deren äußere, sich gegenüberliegende Enden jeweils mit einer Radaufhängung gekoppelt sind. Durch diese Konstruktion sorgt der Wankstabilisator dafür, dass die Karosserie des Fahrzeugs bei einer Kurvenfahrt nicht nur an der kurvenäußeren Seite einfedert (bedingt durch die Zentrifugalkraft), sondern zudem das kurveninnere Rad etwas abgesenkt wird (Kopierverhalten).

Zur weiteren Steigerung der dynamischen Fahrzeugstabilität sowie des Fahrkomforts ist es aus dem Stand der Technik bekannt, derartige Wankstabilisatoren verstellbar auszuführen. Der Wankstabilisator kann dazu in zwei Stabilisatorabschnitte gegliedert sein, die mittels eines zwischen diesen wirkenden Aktuators um eine Rotationsachse gegeneinander verdrehbar sind. Durch Verdrehung der Stabilisatorabschnitte zueinander wird eine Wankbewegung des Fahrzeugaufbaus gezielt erzeugt oder einer durch äußere Einflüsse hervorgerufenen Wankbewegung des Fahrzeugaufbaus gezielt entgegengewirkt.

Es sind verstellbare Wankstabilisatoren bekannt, deren Aktuator einen aus einem elektrischen Antriebsmotor und einem Getriebe gebildeten Antriebsstrang aufweisen. Während der Antriebsmotor gehäusefest gelagert und drehfest mit einem Stabilisatorabschnitt verbunden ist, ist der abtriebsseitige Ausgang des Getriebes des Aktuators mit dem anderen Stabilisatorabschnitt drehfest verbunden, so dass der aus Antriebsmotor und Getriebe gebildete Antriebsstrang zwischen den beiden Stabilisatorabschnitten wirkt. Unter anderem um die Baugröße des Elektromotors in vertretbaren Grenzen zu halten, kommt für den Aktuator üblicherweise ein mechanisches Getriebe, insbesondere in Bauform eines ein- oder mehrstufigen Planetengetriebes zur Übersetzung des Drehmoments bzw. der Drehzahl des Antriebsmotors zum Einsatz. Auf für sich gesehen bekannte Weise verfügen Planetengetriebe über ein zentral angeordnetes Sonnenrad, einen Satz von Planetenrädern sowie ein Hohlrad. Die Planetenräder sind um jeweils eine eigene Drehachse drehbar gegenüber einem Planetenträger gelagert. Sämtliche Planetenträger stehen in kämmendem Eingriff und wälzen sich ab an dem zentral angeordneten Sonnenrad. Zugleich stehen die Planetenräder in kämmendem Eingriff und wälzen sich ab an einem äußeren Hohlrad, das im Anwendungsfall eines Wankstabilisators üblicherweise gehäusefest, das heißt als Teil des Gehäuses des Aktuators ausgeführt ist.

Abhängig von der jeweiligen Getriebestufe (bei einem mehrstufigen Planetengetriebe) kommt es in bestimmten Betriebssituationen zu hohen übertragenen Drehmomenten innerhalb einer Planetenradstufe. Daneben kommt es in bestimmten Betriebssituationen zu Lastwechseln innerhalb des Planetengetriebes. Diese verursachen störende Geräusche (Klappern). Die Störgeräusche können verursacht sein durch Funktionsspiele innerhalb des Antriebsmotors und/oder des Getriebes (Zahnflankenwechsel). Eine Abhilfemaßnahme besteht in der Verwendung besonders ausgeführter Planetenräder, hierzu sei verwiesen auf DE 10 2017 101 396 A1. Das darin beschriebene Planetenrad sorgt für eine Verspannung der betroffenen Planentenradstufe mit dem Ziel der Zahnspielreduzierung.

Aus DE 38 30 243 A1 ist eine Kupplungseinrichtung gemäß einzelnen Merkmalen des Anspruchs 1 bekannt, die - so wird es in der dortigen Einleitung (Spalte 2, Zeilen 19-53) erwähnt - als Sicherheitskupplung bei einem Extruderantrieb in der Kunststoffverarbeitung zum Einsatz kommen kann. Eine der Kontaktflächen der Kupplung ist über ein formveränderliches, aus einer Metalllegierung mit Formerinnerungsvermögen bestehendes Aktivierungsglied mit dem zugehörigen Kupplungsteil verbunden. Das Aktivierungsglied verformt sich unter Temperatureinfluss, womit eine thermische Schaltbarkeit (Aufhebung) der Kupplung erzielt wird. Daneben weist die Kupplungseinrichtung einen axial verschieblichen Spannring auf. Dieser wird mittels einer als Tellerfeder ausgebildeten Druckfeder axial vorgespannt und bildet zusammen mit einem Kuppungskonus eine Keilnut, in die ein Reibkörper eingelegt ist (vgl. dortige Spalte 4, Zeilen 50-61).

Aus DE 10 2009 054 671 A1 ist eine Kupplungseinrichtung für einen (passiven) Wankstabilisator bekannt. Diese weist eine Feststelleinrichtung in Form einer Drehreibkupplung auf, mit der ein Bereich das Stabilisators gegenüber der Karosserie des Fahrzeugs arretierbar ist.

DE 10 2009 045 619 A1 offenbart eine Vorrichtung zum Verstellen der Aufbaufederrate eines Kraftfahrzeugs. Eine Drehfedereinheit mit einem Federelement und einem aufbaufesten Gehäuse kann durch Zu- oder Abschaltung Torsionskraft aufbringen.

DE 10 2004 004 931 A1 offenbart ganz allgemein eine Kupplungseinrichtung in Bauform einer Lamellenkupplung. Diese lässt sich mittels einer Axialverstelleinrichtung betätigen.

DE 27 08 966 A1 offenbart eine schaltbare Getriebekupplung für einen Bootsmotor.

EP 3 156 271 B1 offenbart einen Wankstabilisator für ein Kraftfahrzeug. Es handelt sich dabei um einen passiven Wankstabilisator (nicht aktiv mittels eines Antriebsmotors verstellbar). Die zwei Stabilisatorabschnitte des Wankstabilisators sind über eine schaltbare Kupplung miteinander verbunden.

Es ist eine Aufgabe der vorliegenden Erfindung eine Maßnahme anzugeben, mit der sich eine störende Geräuschentwicklung in bestimmten Fahrsituationen eines wie eingangs beschriebenen Fahrwerksaktuators reduzieren lassen. Es soll ein entsprechender Fahrwerksaktuator angegeben werden.

Die genannte Aufgabe wird gelöst durch einen Fahrwerksaktuator gemäß den Merkmalen des Anspruchs 1.

Die Kupplungseinrichtung des erfindungsgemäßen Fahrwerkaktuators ermöglicht somit ein Betreiben des Fahrwerksaktuators in zwei Zuständen. Im Übertragungszustand (aktiver Zustand) besteht aufgrund des Kraftschlusses eine Antriebsverbindung zwischen der Antriebswelle, welche beispielsweise der Abtriebswelle eines Antriebsmotors des Fahrwerksaktuators entspricht, und dem Abtriebselement der Kupplungseinrichtung, welches beispielsweise ein Eingangselement eines Getriebes des Fahrwerksaktuators bildet. Durch Schalten der Kupplungseinrichtung, betätigt durch axiale Verschiebung des Kupplungselements, ist es somit vorteilhaft möglich, den Fahrwerksaktuator wahlweise mit bestehender mechanischer Antriebsverbindung zwischen Antriebsmotor und Getriebe zu betreiben oder - im Entkopplungszustand - diese mechanische Antriebsverbindung aufzuheben oder zumindest so zu verringern, dass von außen über das Getriebe auf den Fahrwerksaktuator einwirkende Störgrößen (Drehzahlschwankungen, Drehmomentschwankungen, Lastwechsel) vom Antriebsmotor fern gehalten werden.

Zur Betätigung der Kupplungseinrichtung ist der Antriebswelle ein Anlaufelement zugeordnet, insbesondere darauf befestigt, das stirnseitig eine dem Kupplungselement zugewandte Anlaufkontur aufweist, die so gestaltet ist, dass eine Relativdrehung des Anlaufelements gegenüber dem Kupplungselement axiale Verschiebung des Kupplungselements bewirkt. Mit anderen Worten, die an dem Anlaufelement vorgesehene Anlaufkontur sorgt dafür, dass eine Drehung der Antriebswelle (Rotation) in eine axiale Verschiebung (Translation) des Kupplungselements wandelbar ist.

Zweckmäßigerweise ist die am Anlaufelement ausgebildete Anlaufkontur komplementär gestaltet zu einer Anlaufkontur, die an einer dem Anlaufelement zugewandten Fläche des Kupplungselements ausgebildet ist. Zweckmäßigerweise weist die Anlaufkontur zumindest bereichsweise einen gegenüber der Radialebene schrägen Flächenabschnitt auf, wodurch gewährleistet ist, dass bei Kontakt der Anlaufkontur des Anlaufelements mit der Anlaufkontur des Kupplungselements an diesem schrägen Flächenabschnitt eine Wandlung der rotatorischen Bewegung in eine translatorische Bewegung erfolgt.

Eine vorteilhafte Weiterbildung der Kupplungseinrichtung sieht in diesem Zusammenhang vor, dass die am Anlaufelement ausgebildete Anlaufkontur bezogen auf deren umfänglichen Verlauf wenigstens eine axiale Erhebung aufweist.

Damit sich die Kupplungseinrichtung in beide Drehrichtungen der Antriebswelle gleichermaßen betreiben lässt, sieht eine vorteilhafte Weiterbildung der Kupplungseinrichtung vor, dass die wenigstens eine axiale Erhebung in beide Umfangsrichtungen gleichermaßen zu einer axialen Vertiefung abfällt. Die Kupplungsbetätigung durch das Anlaufelement kann so in beide Drehrichtungen der Antriebswelle gleichermaßen erfolgen.

Das Kupplungselement kann auf unterschiedliche Weise gestaltet sein. Zweckmäßiger Weise handelt es sich um ein im Wesentlichen rotationssymmetrisches Bauteil, wobei vorteilhaft eine dem Abtriebselement zugewandte stirnseitige Kupplungsfläche des Kupplungselements konusförmig ausgebildet ist.

Das Kupplungselement und das Abtriebselement sind an einander zugewandten, insbesondere konischen Flächenbereichen jeweils mit einem Kupplungsbelag versehen. Dadurch ist gewährleistet, dass sich zwischen Kupplungselement und Abtriebselement durch Kraftschluss eine Antriebsverbindung herstellen lässt, in dem das Kupplungselement in axialer Richtung gegen das Abtriebselement gedrückt wird. Mit Unterschreiten einer für den Kraftschluss nötigen Kupplungskraft wird die kraftschlüssige Antriebsverbindung aufgehoben, Kupplungselement und Abtriebselement sind in diesem Fall voneinander entkoppelt (Entkopplungszustand).

Zum Einsatz der Kupplungseinrichtung für einen Fahrwerksaktuator eines verstellbaren Wankstabilisators ist vorteilhaft das Abtriebselement insbesondere mittels eines Wälzlagers drehbar, vorzugsweise auch geringfügig axial verschiebbar, auf der Antriebswelle gelagert.

Eine wie zuvor erwähnte geringfügige axiale Verschiebbarkeit des Abtriebselements auf der Antriebswelle ist insbesondere dann zweckmäßig, wenn auf der Antriebswelle, an einer dem Kupplungselement abgewandten Seite des Abtriebselements, ein Gegenreibelement angeordnet ist, wobei das Gegenreibelement und das Abtriebselement an einander zugewandten insbesondere konischen Flächenbereichen jeweils mit einem Kupplungsbelag versehen sind. Bei dieser Gestaltung wird das Abtriebselement bei Betätigen der Kupplungseinrichtung (Herstellung des Kraftschlusses) axial eingeklemmt zwischen Kupplungselement und Gegenreibelement, wobei sich eine besonders große nutzbare Kupplungsfläche ergibt. Die gewisse axiale Beweglichkeit des Abtriebselements gewährleistet, dass beidseits des Abtriebselements gleich hohe Kupplungskräfte entstehen.

Für den bevorzugten Einsatzzweck der Kupplungseinrichtung am Fahrwerksaktuator eines verstellbaren Wankstabilisators ist das Abtriebselement vorzugsweise ein Sonnenrad oder Teil eines Sonnenrads eines insbesondere mehrstufigen Planetengetriebes. In diesem Fall ist die Kupplungseinrichtung besonders bauraumsparend in das Planetengetriebe integriert.

Zweckmäßigerweise ist weiterhin vorgesehen, dass dem Kupplungselement Mittel zugeordnet sind, die das Kupplungselement gegenüber dem Abtriebselement axial vorspannen. Eine zumindest geringfügige axiale Vorspannung des Kupplungselements gegenüber dem Abtriebselement sorgt dafür, dass in jedem Betriebszustand der Kupplungseinrichtung zumindest ein geringfügiger Reibwiderstand zwischen diesen besteht, der zur Auslösung der Kupplung erforderlich ist. Die Vorspannung kann beispielsweise durch ein Federelement erzielt werden, das sich axial an der Antriebswelle oder am daran angebrachten Anlaufelement abstützt, um das Kupplungselement in axialer Richtung gegen das Abtriebselement vorzuspannen.

Die eingangs genannte Aufgabe wird ebenfalls gelöst durch einen Fahrwerksaktuator für ein Kraftfahrzeug gemäß dem Merkmal des Anspruchs 12. Es handelt sich dabei um einen Fahrwerksaktuator für ein Kraftfahrzeug, insbesondere eines verstellbaren Wankstabilisators, mit einem einen Antriebsmotor und ein Getriebe aufweisenden Antriebsstrang zum Antrieb wenigstens einer Fahrwerkkomponente. Bei dem Antriebsmotor handelt es sich vorzugsweise um einen Elektromotor. Der Fahrwerksaktuator zeichnet sich erfindungsgemäß aus durch eine im Antriebsstrang angeordnete Kupplungseinrichtung der zuvor beschriebenen Art, die in Abhängigkeit des Betriebszustands des Antriebsmotors schaltbar ist zwischen einem Übertragungszustand (aktiver Zustand), in welchem zwischen Antriebsmotor und einem Ausgang des Getriebes eine Antriebsverbindung besteht, und einem Entkopplungszustand (passiver Zustand), in welchem die Antriebsverbindung aufgehoben oder zumindest vermindert ist. Die zum Einsatz kommende Kupplungseinrichtung entspricht der zuvor mit Bezug zu Anspruch 1 beschriebenen Kupplungseinrichtung, und kann vorteilhaft die in diesem Zusammenhang erläuterten Merkmale aufweisen.

In vorteilhafter Weise handelt es sich um einen Fahrwerksaktuator eines verstellbaren Wankstabilisators. In diesem Fall handelt es sich bei der wenigstens einen Fahrwerkkomponente um zwei Stabilisatorabschnitte eines verstellbaren Wankstabilisators. Der Fahrwerksaktuator ist derart zwischen diesen zwei Stabilisatorabschnitten wirkend angeordnet, dass sich die Stabilisatorabschnitte mittels des Fahrwerksaktuators um eine Rotationsachse gegeneinander verdrehen lassen.

Dabei ist der Fahrwerksaktuator vorteilhaft so gestaltet, dass die Kupplungseinrichtung durch mechanisches Zusammenwirken eines motorseitigen Anlaufelements mit einem Kupplungselement derart schaltbar ist, dass bei Betrieb des Antriebsmotors der Übertragungszustand (aktiver Zustand) und bei ruhendem Antriebsmotor der Entkopplungszustand (passiver Zustand) vorliegt.

Der Fahrwerksaktuator ist daher - abhängig vom Schaltzustand der Kupplungseinrichtung - entweder betreibbar im Entkopplungszustand, in welchem die über Fahrbahnunebenheiten über das Fahrwerk in den Antriebsstrang eingeleiteten Schwingungen vom Antriebsmotor entkoppelt sind, oder im Übertragungszustand des Fahrwerksaktuators, in welchem aufgrund einer bestehenden Antriebsverbindung zwischen Antriebsmotor, Getriebe und Fahrwerkkomponente die Stabilisatorabschnitte mittels des Antriebsstrangs um die Rotationsachse gegeneinander verdrehbar sind. In letzterem (aktivem) Zustand ist es somit möglich, dass der Antriebsmotor einen gezielten Eingriff in das Wankverhalten des Kraftfahrzeugs vornimmt.

Die Erfindung wird nachfolgend anhand der beigefügten Zeichnung näher erläutert. Daraus ergeben sich auch weitere vorteilhafte Ausgestaltungen und Wirkungen der Erfindung. In der Zeichnung zeigt:
- Figur 1: einen verstellbaren Wankstabilisator eines Kraftfahrzeugs in schematischer Ansicht,
- Figur 2: eine erfindungsgemäße Kupplungseinrichtung in vereinfachter schematischer Ansicht im Übertragungszustand,
- Figur 3: einen Teil der in Figur 2 gezeigten Kupplungseinrichtung in vereinfachter perspektivischer Darstellung,
- Figur 4: ein Kupplungselement der in Figur 2 gezeigten Kupplungseinrichtung in vereinfachter perspektivischer Darstellung,
- Figur 5: die Kupplungseinrichtung gemäß Figur 2 in vereinfachter schematischer Darstellung im Entkopplungszustand.

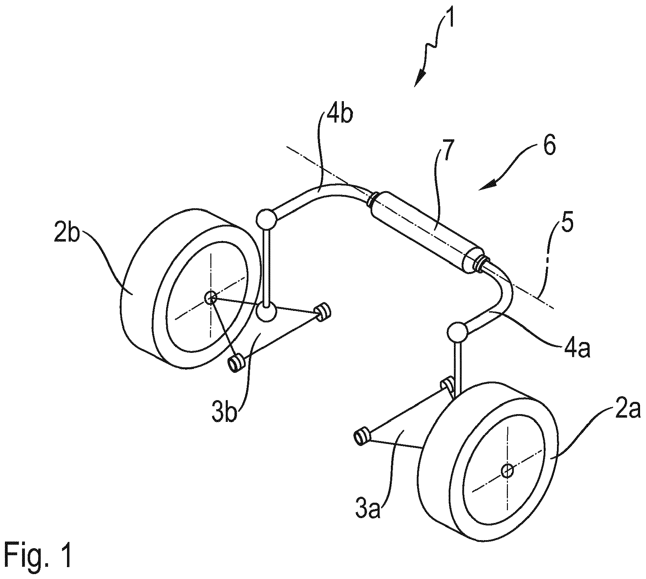

Zunächst zeigt Figur 1 zur Veranschaulichung des bevorzugten Einsatzgebietes der Erfindung einen verstellbaren Wankstabilisator 1 in schematischer Ansicht. Der Wankstabilisator 1 ist Teil eines nicht vollständig gezeigten Fahrwerks eines (nicht dargestellten) Kraftfahrzeugs. Ein erstes Rad 2a und ein auf der gegenüberliegenden Fahrzeugseite angeordnetes zweites Rad 2b sind jeweils über eine vereinfacht dargestellte Radaufhängung 3a, 3b mit dem Aufbau des Kraftfahrzeugs verbunden. Jede der Radaufhängungen 3a, 3b ist mit einem Ende eines zugehörigen Stabilisatorabschnitts 4a bzw. 4b des verstellbaren Wankstabilisators 1 verbunden. Die beiden Stabilisatorabschnitte 4a und 4b sind fahrzeugmittig über einen Aktuator 6 miteinander verbunden.

Auf für sich gesehen bekannte Weise ist der verstellbare Wankstabilisator 1 um eine Rotationsachse 5 drehbar gegenüber dem Fahrzeugaufbau gelagert (Lagerung nicht näher gezeigt). Der Aktuator 6, hier vereinfacht dargestellt als zylindrischer Körper, umfasst im Wesentlichen ein Gehäuse 7, in welchem ein Elektromotor sowie ein mehrstufiges Planetengetriebe angeordnet sind, die zusammen einen Antriebsstrang zum Antrieb eines Stabilisatorabschnitts 4a gegenüber dem anderen Stabilisatorabschnitt 4b nutzbar ist. Mittels des Aktuators 6 sind die Stabilisatorabschnitte 4a und 4b somit in Antriebsverbindung bringbar. Im Übertragungszustand (aktiver Zustand), in welchem Elektromotor, Getriebe und Stabilisatorabschnitt 4a in Antriebsverbindung miteinander stehen, lassen sich die Stabilisatorabschnitte 4a und 4b abhängig von der Drehrichtung des Elektromotors um die Rotationsachse 5 gegeneinander verdrehen. Der Wankstabilisator 1 lässt sich so auf für sich gesehen bekannte Weise verstellen, um insbesondere das Wankverhalten des Kraftfahrzeugs gezielt zu beeinflussen.

Das im Aktuator 6 vorgesehene Getriebe ist typischerweise als mehrstufiges Planetengetriebe ausgeführt. Insbesondere die abtriebsseitige Planetenradstufe, welche also drehfest mit dem Stabilisatorabschnitt 4a verbunden ist, kann im Betrieb des Kraftfahrzeugs starken Drehschwingungen (in Art und Höhe stark wechselnde Drehmomente) ausgesetzt. Diese werden insbesondere durch Fahrbahnunebenheiten verursacht, die über das Fahrwerk als Drehbewegung der Stabilisatorabschnitte um die Rotationsachse in den Aktuator eingeleitet wird.

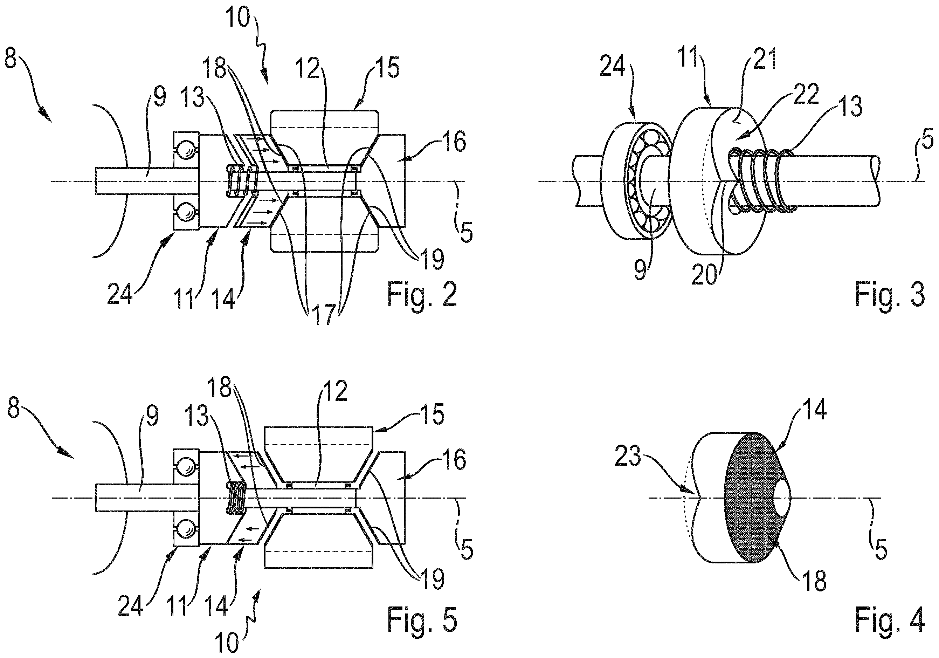

Zur Entkopplung des Antriebsmotors des Aktuators von störenden Schwingungen im Antriebsstrang, eingeleitet durch das Fahrwerk, weist der am Wankstabilisator 1 gemäß Figur 1 gezeigte Aktuator 6 erfindungsgemäß eine Kupplungseinrichtung 10 auf, die nachfolgend anhand der Figuren 2 bis 5 näher zu erläutern ist. Die Figuren 2 bis 5 beziehen sich auf ein erstes Ausführungsbeispiel der Kupplungseinrichtung 10, wobei die Darstellungen der Figuren 2 und 5 jeweils die Kupplungseinrichtung 10 in verschiedenen Zuständen zeigen, während in den Figuren 3 und 4 Einzelheiten der Kupplungseinrichtung 10 dargestellt sind. Da sich die Figuren 2 bis 5 auf ein gleiches Ausführungsbeispiel der Kupplungseinrichtung 10 beziehen, sind gleiche Bauteile in den Figuren mit gleichen Bezugsziffern versehen, und zur Vermeidung von Wiederholungen sei angemerkt, dass die nachfolgenden Erläuterungen in Bezug auf die Figuren 2 bis 5 im Gesamtzusammenhang zu verstehen sind.

Zunächst zeigt Figur 2 in stark vereinfachter Ansicht eine Kupplungseinrichtung 10 gemäß einem Ausführungsbeispiel der Erfindung im Übertragungszustand (aktiver Zustand). Die Kupplungseinrichtung 10 kann sich im Antriebsstrang eines Aktuators eines verstellbaren Wankstabilisators wie in Figur 1 gezeigt befinden. Wie bereits anhand von Figur 1 erläutert, weist ein solcher Aktuator einen Antriebsstrang zum Antrieb wenigstens einer Fahrwerkkomponente 4a, 4b in Form eines Stabilisatorabschnitts auf. Mit Hilfe des Antriebsstrangs, aufweisend einen Antriebsmotor 8 und ein insbesondere mehrstufiges Planetengetriebe lassen sich die zwei Stabilisatorabschnitte 4a, 4b um die Rotationsachse 5 gegeneinander verdrehen.

Figur 2 zeigt in vereinfachter Darstellung die im Antriebsstrang eines Aktuators angeordnete Kupplungseinrichtung 10, wobei zur Orientierung die Rotationsachse 5 angegeben ist. Ein Antriebsmotor 8 in Form eines Elektromotors weist abtriebsseitig eine Motorwelle 9 auf, die über ein Lager 24 drehbar innerhalb eines (nicht eingezeichneten) Gehäuses des Aktuators gelagert ist. Die Kupplungseinrichtung 10 dient dazu, zwischen der Motorwelle 9 und einem Abtriebselement 15 der Kupplungseinrichtung 10 eine Antriebsverbindung entweder herstellen oder aufheben bzw. vermindern zu können. Es handelt sich demnach um eine schaltbare Kupplungseinrichtung 10. Das Abtriebselement 15 der Kupplungseinrichtung 10 ist als im Wesentlichen rotationssymmetrisches Bauteil (bezogen auf die Rotationsachse 5) ausgeführt und ist drehbar gelagert gegenüber der Motorwelle 9. Im gezeigten Fall dient zur drehbaren Lagerung ein Nadellager 12.

Das Abtriebselement 15 der Kupplungseinrichtung 10 dient zugleich als Eingangselement in ein mehrstufiges Planetengetriebe (nicht gezeigt) des Aktuators. Indem das Abtriebselement 15 der Kupplungseinrichtung 10 ein Sonnenrad oder Teil eines Sonnenrads des mehrstufigen Planetengetriebes ist, wird für den Aktuator eine vorteilhafte kompakte Bauform unter Gewährleistung einer Funktionsintegration (zusätzliches Vorhandensein einer Kupplung) ermöglicht.

Das als Sonnenrad ausgeführte Abtriebselement 15 weist an seinen beiden innenliegenden Stirnflächenbereichen eine Konizität auf, die jeweils mit einem Kupplungsbelag 17 versehen ist. Auf der dem Antriebsmotor 8 abgewandten Seite des Sonnenrads 15 ist an der Motorwelle 9 ein Konus 16 angeordnet. Dieser ist ebenfalls mit einem Kupplungsbelag 19 versehen und ist gegenüberliegend angeordnet in Bezug auf den Kupplungsbelag 17 am Sonnenrad 15.

An der dem Antriebsmotor 8 zugewandten Seite des Sonnenrads 15 ist eine axial verschiebliche Kupplungsscheibe 14 angeordnet. Die Kupplungsscheibe 14, einzeln dargestellt in Figur 4, ist als im Wesentlichen rotationssymmetrisches Bauteil (bezogen auf die Rotationsachse 5) ausgebildet und weist an einer dem Sonnenrad 15 zugewandten Seite eine konusförmige Stirnfläche auf, die mit einem Kupplungsbelag 18 versehen ist. An der axial entgegengesetzten Seite (dem Antriebsmotor 8 zugewandt) ist an der Kupplungsscheibe 14 eine Anlaufkontur 23 ausgebildet. Die Kupplungsscheibe 14 ist drehbar gegenüber der Motorwelle 9 gelagert und ist zudem axial verschieblich zwischen einer Position, in welcher die Kupplungsscheibe 14 an eine auf der Motorwelle 9 fest gelagerte Anlaufscheibe 11 anstößt und einer Position, in welcher die Kupplungsscheibe 14 mit deren Kupplungsbelag 18 gegen den Kupplungsbelag 17 des Sonnenrads 15 anstößt.

Indem das Sonnenrad 15 mit einem gewissen axialen Spiel gegenüber der Motorwelle 9 gelagert ist, bewirkt eine Verschiebung der Kupplungsscheibe 14 in axialer Richtung auf das Sonnenrad 15 zu eine Verschiebung des Sonnenrads 15 in Richtung des Konus 16. Mit zunehmender axialer Bewegung schließen sich die Zwischenräume zwischen Kupplungsscheibe 14 und Sonnenrad 15 bzw. zwischen Sonnenrad 15 und Konus 16 von einem wie in Figur 5 gezeigten Entkopplungszustand, in welchem zwischen den Kupplungsbelägen 17 und 18 bzw. 19 ein Zwischenraum besteht in einen wie in Figur 2 gezeigten Übertragungszustand, bei welchem die Kupplungsbeläge 17 und 18 bzw. 19 aneinander anliegen und somit einen Kraftschluss eingehen. Da der Konus 16 drehfest mit der Motorwelle 9 verbunden ist, wird bei Vorliegen eines Kraftschlusses gemäß dem in Figur 2 gezeigten Übertragungszustand eine Antriebsverbindung zwischen Motorwelle 9 und Sonnenrad 15 hergestellt. Umgekehrt sind gemäß dem in Figur 5 gezeigten Entkopplungszustand, in welchem der Kraftschluss zwischen Kupplungselement und Sonnenrad bzw. Sonnenrad und Konus 16 aufgehoben ist, das Sonnenrad 15 und die Motorwelle 9 antriebsmäßig voneinander entkoppelt.

Wie am besten anhand von Figur 3 zu sehen, befindet sich auf der Motorwelle 9 eine Anlaufscheibe 11. Die Anlaufscheibe 11 ist drehfest auf der Motorwelle 9 angeordnet und erfüllt letztlich in Zusammenwirkung mit der Kupplungsscheibe 14 die Funktion, die Kupplungseinrichtung 10 in Abhängigkeit des Betriebszustands des Antriebsmotors 8 mechanisch zu betätigen. Dazu weist die Anlaufscheibe 11 an ihrer der Kupplungsscheibe 14 zugewandten Seite eine Anlaufkontur 22 auf, die so gestaltet ist, dass eine Relativdrehung der Anlaufscheibe 11 - zusammen mit der Motorwelle 9 - gegenüber der Kupplungsscheibe 14 eine axiale Verschiebung der Kupplungsscheibe 14 bewirkt. Die auf der Anlaufscheibe 11 ausgebildete Anlaufkontur 22 ist zu diesem Zweck komplementär gestaltet zu der Anlaufkontur 23 (vergleiche Figur 4), die an der der Anlaufscheibe 11 zugewandten Fläche der Kupplungsscheibe 14 ausgebildet ist. Die an der Anlaufscheibe 11 ausgebildete Anlaufkontur 22 weist bezogen auf deren umfänglichen Verlauf konkret zwei axiale Erhebungen 20 auf, die in beide Umfangsrichtungen gleichermaßen zu einer axialen Vertiefung 21 abfallen. Gemäß Darstellung von Figur 3 ist lediglich die aufgrund der perspektivischen Darstellung vordere axiale Erhebung 20 zu sehen, eine zweite, hintere axiale Erhebung ist durch die Motorwelle 9 verdeckt.

Aufgrund der Formgebung der Anlaufscheibe 11, insbesondere der daran vorgesehenen Anlaufkontur 22 sowie der dazu komplementär ausgebildeten Anlaufkontur 23 an der Kupplungsscheibe 14, lässt sich durch rotatorische Bewegung der Anlaufscheibe 11 über die Motorwelle 9 eine translatorische Bewegung der Kupplungsscheibe 14 in Axialrichtung (auf das Sonnenrad 15 zu) bewirken. Da eine axiale Verschiebung der Kupplungsscheibe 14, wie bereits zuvor erwähnt, ein Betätigen der Kupplungseinrichtung 10 bewirkt (Schalten vom Entkopplungszustand in den Übertragungszustand) ist durch die Kupplungseinrichtung 10 eine Möglichkeit geschaffen, in Abhängigkeit vom Betriebszustand des Antriebsmotors 8 eine Antriebsverbindung zwischen Motorwelle 9 und Sonnenrad 15 herzustellen bzw. diese aufzuheben oder zumindest zu vermindern.

Wie in Figur 3 dargestellt, ist auf der Motorwelle 9 zudem ein Federelement 13 in Form einer Schraubenfeder angeordnet. Die Schraubenfeder 13 liegt mit einem Ende axial an der Anlaufscheibe 11 an. Mit einem gegenüberliegenden Ende liegt die Schraubenfeder 13 - im Zusammenbauzustand gemäß Figuren 2 bzw. 5 - an der Kupplungsscheibe 14 an. Bedingt durch die Einbausituation übt somit die Schraubenfeder 13 auf die Kupplungsscheibe 14 eine axiale Vorspannung aus, so dass die Kupplungsscheibe 14 gegenüber dem Sonnenrad 15 zumindest geringfügig axial vorgespannt ist. Durch die gewisse axiale Vorspannung ist gewährleistet, dass die Kupplungsscheibe 14 ständig in einem gewissen Reibkontakt mit dem Sonnenrad 15 steht (insofern stellt Figur 5 eine rein aus Verständnisgründen übertriebene Beabstandung dar), um ein freies Mitdrehen der Kupplungsscheibe 14 mit der Anlaufscheibe 11 zu verhindern. Der zumindest geringfügig stets vorliegende Reibwiderstand zwischen Sonnenrad 15 und Kupplungsscheibe 14 soll demnach gewährleisten, dass die sich im Entkopplungszustand befindliche Kupplungsscheibe 14 bei Anlaufen des Elektromotors 8 nicht einfach mit der sich zu drehen beginnenden Anlaufscheibe 11 mitdreht, sondern dass durch eine zunächst einsetzende Relativverdrehung zwischen Anlaufscheibe 11 und Kupplungsscheibe 14 die Anlaufkonturen 22 und 23 an Anlaufscheibe 11 und Kupplungsscheibe 14 in derartigen Eingriffskontakt geraten, dass eine axiale Verschiebung der Kupplungsscheibe 14 in Richtung des Sonnenrads 15 stattfindet.

Die in Figur 5 dargestellten Zwischenräume zwischen den Kupplungsbelägen 17 und 18 bzw. 19 sind demnach als übertrieben dargestellt anzusehen. Tatsächlich liegt aufgrund der axialen Vorspannung durch die Schraubenfeder 13 auch im Entkopplungszustand der Kupplungseinrichtung 10 stets ein zumindest geringfügiger Reibkontakt an diesen Kupplungsbelägen vor, dieser ist im Entkopplungszustand jedoch so gering, dass zwischen Motorwelle 9 und Sonnenrad 15 keine feste Antriebsverbindung besteht.

Die so beschriebene Kupplungseinrichtung 10 bzw. ein damit versehener Fahrwerksaktuator eines verstellbaren Wankstabilisators bieten die Möglichkeit, den Antriebsmotor vom Getriebe bzw. vom Fahrwerk in Abhängigkeit vom Betriebszustand des Antriebsmotors mechanisch zu koppeln. Die Betätigung der Kupplungseinrichtung erfolgt dabei rein mechanisch ohne Zuhilfenahme elektrischer Einrichtungen und weist somit diesbezüglich keine Störanfälligkeit auf. Durch die integrierte Bauweise ist eine platzsparende Anordnung der Kupplungseinrichtung innerhalb des Gehäuses des Aktuators möglich. Durch die Möglichkeit der Entkopplung lassen sich auf vorteilhafte Weise störende Schwingungen und somit störende Geräusche reduzieren, die in bestimmten Betriebssituationen durch Bewegungen des Fahrwerks in den Aktuator eingeleitet werden. Die Gestaltung der Anlaufscheibe 11 mit darauf vorgesehener Anlaufkontur 22 bzw. der entsprechend komplementär ausgebildeten Anlaufkontur 23 an der Kupplungsscheibe 14 ermöglicht eine Betätigung der Kupplungseinrichtung 10 in beide Laufrichtungen des Antriebsmotors 8. Das Schalten zwischen Entkopplungszustand und Übertragungszustand ist somit richtungsunabhängig, was für einen Einsatz innerhalb eines verstellbaren Wankstabilisators bedeutsam ist, da dessen Aktuator in beide Drehrichtungen gleichermaßen betrieben wird.

### Bezugszeichen

- 1: verstellbarer Wankstabilisator
- 2a, 2b: Rad
- 3a, 3b: Radaufhängung
- 4a, 4b: Stabilisatorabschnitt
- 5: Rotationsachse
- 6: Aktuator
- 7: Gehäuse
- 8: Elektromotor
- 9: Motorwelle
- 10: Kupplungseinrichtung
- 11: Anlaufscheibe
- 12: Nadellager
- 13: Schraubenfeder
- 14: Kupplungsscheibe (axial verschieblich)
- 15: Sonnenrad
- 16: Konus
- 17: Kupplungsbelag
- 18: Kupplungsbelag
- 19: Kupplungsbelag
- 20: Erhebung
- 21: Vertiefung
- 22: Anlaufkontur
- 23: Anlaufkontur
- 24: Lager

## Patentansprüche

1. Fahrwerksaktuator (6) für einen verstellbaren Wankstabilisator (1) eines Kraftfahrzeugs, mit einem einen Antriebsmotor (8) und ein Getriebe aufweisenden Antriebsstrang zum Antrieb wenigstens einer Fahrwerkkomponente (4a, 4b) und mit einer Kupplungseinrichtung (10) zur lösbaren Verbindung einer Antriebswelle (9) mit einem Abtriebselement (15), die in Abhängigkeit des Betriebszustands des Antriebsmotors (8) schaltbar ist zwischen einem Übertragungszustand (aktiver Zustand), in welchem zwischen Antriebsmotor (8) und einem Ausgang (4a) des Getriebes eine Antriebsverbindung besteht, und einem Entkopplungszustand (passiver Zustand), in welchem die Antriebsverbindung aufgehoben oder zumindest vermindert ist, wobei die Kupplungseinrichtung (10) ein auf der Antriebswelle (9) gelagertes Kupplungselement (14) aufweist, das abhängig vom Betriebszustand der Antriebswelle (9) axial verschiebbar ist zwischen dem
Übertragungszustand (aktiver Zustand), in welchem das Kupplungselement (14) gegenüber dem Abtriebselement (15) einen Kraftschluss eingeht, um zwischen Antriebswelle (9) und Abtriebselement (15) eine Antriebsverbindung herzustellen, und dem
Entkopplungszustand (passiver Zustand), in welchem der Kraftschluss zwischen Kupplungselement (14) und Abtriebselement (15) aufgehoben oder zumindest vermindert ist, um das Abtriebselement (15) und die Antriebswelle (9) antriebsmäßig voneinander zu entkoppeln,
**dadurch gekennzeichnet, dass**
der Antriebswelle (9) ein Anlaufelement (11) zugeordnet ist, das stirnseitig eine dem Kupplungselement (14) zugewandte Anlaufkontur (22) aufweist, die so gestaltet ist, dass eine Relativdrehung des Anlaufelements (11) gegenüber dem Kupplungselement (14) eine axiale Verschiebung des Kupplungselements (14) bewirkt.

2. Fahrwerksaktuator nach Anspruch 1, **dadurch gekennzeichnet, dass** das Anlaufelement (11) auf der Antriebswelle (9) befestigt ist.

3. Fahrwerksaktuator nach Anspruch 2, **dadurch gekennzeichnet, dass** die am Anlaufelement (11) ausgebildete Anlaufkontur (22) komplementär gestaltet ist zu einer Anlaufkontur (23), die an einer dem Anlaufelement (11) zugewandten Fläche des Kupplungselements (14) ausgebildet ist.

4. Fahrwerksaktuator nach Anspruch 2 oder 3, **dadurch gekennzeichnet, dass** die am Anlaufelement (11) ausgebildete Anlaufkontur (22) bezogen auf deren umfänglichen Verlauf wenigstens eine axiale Erhebung (20) aufweist.

5. Fahrwerksaktuator nach Anspruch 4, **dadurch gekennzeichnet, dass** die wenigstens eine axiale Erhebung (20) in beide Umfangsrichtungen gleichermaßen zu einer axialen Vertiefung (21) abfällt.

6. Fahrwerksaktuator nach einem der vorigen Ansprüche, **dadurch gekennzeichnet, dass** eine dem Abtriebselement (15) zugewandte stirnseitige Kupplungsfläche (18) des Kupplungselements (14) konusförmig ausgebildet ist.

7. Fahrwerksaktuator nach einem der vorigen Ansprüche, **dadurch gekennzeichnet, dass** das Kupplungselement (14) und das Abtriebselement (15) an einander zugewandten, insbesondere konischen Flächenbereichen jeweils mit einem Kupplungsbelag (17, 18) versehen sind.

8. Fahrwerksaktuator nach einem der vorigen Ansprüche, **dadurch gekennzeichnet, dass** das Abtriebselement (15) insbesondere mittels eines Wälzlagers (12) drehbar, vorzugsweise auch geringfügig axial verschiebbar, auf der Antriebswelle (9) gelagert ist.

9. Fahrwerksaktuator nach einem der vorigen Ansprüche, **dadurch gekennzeichnet, dass** auf der Antriebswelle (9), an einer dem Kupplungselement (14) abgewandten Seite des Abtriebselements (15), ein Gegenreibelement (16) angeordnet ist, wobei das Gegenreibelement (16) und das Abtriebselement (15) an einander zugewandten insbesondere konischen Flächenbereichen jeweils mit einem Kupplungsbelag (19, 17) versehen sind.

10. Fahrwerksaktuator nach einem der vorigen Ansprüche, **dadurch gekennzeichnet, dass** das Abtriebselement (15) ein Sonnenrad oder Teil eines Sonnenrads eines insbesondere mehrstufigen Planetengetriebes ist.

11. Fahrwerksaktuator nach einem der vorigen Ansprüche, **dadurch gekennzeichnet, dass** dem Kupplungselement (14) Mittel (13) zugeordnet sind, die das Kupplungselement (14) gegenüber dem Abtriebselement (15) axial vorspannen.

12. Fahrwerksaktuator nach einem der vorigen Ansprüche , **dadurch gekennzeichnet, dass** die Kupplungseinrichtung (10) durch mechanisches Zusammenwirken eines motorseitigen Anlaufelements (11) mit einem Kupplungselement (14) derart schaltbar ist, dass bei Betrieb des Antriebsmotors (8) der Übertragungszustand (aktiver Zustand) und bei ruhendem Antriebsmotor (8) der Entkopplungszustand (passiver Zustand) vorliegt.

13. Fahrwerksaktuator nach einem der vorigen Ansprüche, **dadurch gekennzeichnet, dass** es sich bei der wenigstens einen Fahrwerkkomponente um zwei Stabilisatorabschnitte (4a, 4b) eines verstellbaren Wankstabilisators (1) handelt, die - im Übertragungszustand des Fahrwerksaktuators (6) - mittels des Antriebsstrangs um eine Rotationsachse (5) gegeneinander verdrehbar sind.

## Claims

1. Chassis actuator (6) for an adjustable roll stabilizer (1) of a motor vehicle, having a drive train, which has a drive motor (8) and a gear mechanism and serves for driving at least one chassis component (4a, 4b), and having a clutch device (10), which serves for releasable connection of a drive shaft (9) to an output element (15) and is switchable between a transmission state (active state), in which there is a drive connection between drive motor (8) and an output (4a) of the gear mechanism, and a decoupling state (passive state), in which the drive connection is eliminated or at least reduced, according to the operating state of the drive motor (8), wherein the clutch device (10) has a clutch element (14) which is mounted on the drive shaft (9) and which is axially displaceable between the transmission state (active state), in which the clutch element (14) establishes a force fit with respect to the output element (15) in order to produce a drive connection between drive shaft (9) and output element (15), and the decoupling state (passive state), in which the force fit between clutch element (14) and output element (15) is eliminated or at least reduced in order to decouple the output element (15) and the drive shaft (9) from one another in terms of drive, according to the operating state of the drive shaft (9),
**characterized in that** the drive shaft (9) is assigned a run-on element (11) which, at an end face, has a run-on contour (22) facing towards the clutch element (14) that is designed in such a way that a relative rotation of the run-on element (11) with respect to the clutch element (14) brings about an axial displacement of the clutch element (14).

2. Chassis actuator according to Claim 1, **characterized in that** the run-on element (11) is fastened to the drive shaft (9).

3. Chassis actuator according to Claim 2, **characterized in that** the run-on contour (22) formed on the run-on element (11) is designed in a manner complementary to a run-on contour (23) formed on a surface of the clutch element (14) that faces towards the run-on element (11).

4. Chassis actuator according to Claim 2 or 3, **characterized in that**, with respect to its circumferential profile, the run-on contour (22) formed on the run-on element (11) has at least one axial elevation (20).

5. Chassis actuator according to Claim 4, **characterized in that**, from the at least one axial elevation (20), there is an equal descent to an axial depression (21) in the two circumferential directions.

6. Chassis actuator according to one of the preceding claims, **characterized in that** an end-face clutch surface (18), facing towards the output element (15), of the clutch element (14) is of conical form.

7. Chassis actuator according to one of the preceding claims, **characterized in that** the clutch element (14) and the output element (15) are each provided with a clutch lining (17, 18) on in particular conical surface regions which face towards one another.

8. Chassis actuator according to one of the preceding claims, **characterized in that** the output element (15) is mounted on the drive shaft (9) so as to be, in particular by means of a rolling bearing (12), rotatable, and preferably also slightly axially displaceable.

9. Chassis actuator according to one of the preceding claims, **characterized in that** a counterpart friction element (16) is arranged on the drive shaft (9) on a side of the output element (15) that faces away from the clutch element (14), wherein the counterpart friction element (16) and the output element (15) are each provided with a clutch lining (19, 17) on in particular conical surface regions which face towards one another.

10. Chassis actuator according to one of the preceding claims, **characterized in that** the output element (15) is a sun gear or part of a sun gear of an in particular multi-stage planetary gear mechanism.

11. Chassis actuator according to one of the preceding claims, **characterized in that** the clutch element (14) is assigned means (13) which axially preload the clutch element (14) with respect to the output element (15).

12. Chassis actuator according to one of the preceding claims, **characterized in that**, by way of mechanical interaction of a motor-side run-on element (11) with a clutch element (14), the clutch device (10) is switchable in such a way that the transmission state (active state) is present when the drive motor (8) is in operation and the decoupling state (passive state) is present when the drive motor (8) is stationary.

13. Chassis actuator according to one of the preceding claims, **characterized in that** the at least one chassis component involves two stabilizer sections (4a, 4b) of an adjustable roll stabilizer (1), which stabilizer sections - in the transmission state of the chassis actuator (6) - are rotatable with respect to one another about an axis of rotation (5) by means of the drive train.

## Revendications

1. Actionneur de châssis (6) pour une barre antiroulis réglable (1) d'un véhicule automobile, comportant une chaîne cinématique présentant un moteur d'entraînement (8) et une transmission, servant à l'entraînement d'au moins un composant de châssis (4a, 4b) et comportant un dispositif d'accouplement (10) servant à la liaison libérable d'un arbre d'entraînement (9) à un élément de sortie (15), lequel dispositif d'accouplement peut être commuté, en fonction de l'état de fonctionnement du moteur d'entraînement (8), entre un état de transmission (état actif), dans lequel une liaison d'entraînement existe entre le moteur d'entraînement (8) et une sortie (4a) de la transmission, et un état de désaccouplement (état passif), dans lequel la liaison d'entraînement est supprimée ou au moins réduite, le dispositif d'accouplement (10) présentant un élément d'accouplement (14) monté sur l'arbre d'entraînement (9), lequel élément d'accouplement, en fonction de l'état de fonctionnement de l'arbre d'entraînement (9), est déplaçable axialement entre
l'état de transmission (état actif), dans lequel l'élément d'accouplement (14) forme un engagement par force par rapport à l'élément de sortie (15), afin de produire une liaison d'entraînement entre l'arbre d'entraînement (9) et l'élément de sortie (15),
et
l'état de désaccouplement (état passif), dans lequel l'engagement par force entre l'élément d'accouplement (14) et l'élément de sor'tie (15) est supprimé ou au moins réduit, afin de désaccoupler l'élément de sortie (15) et l'arbre d'entraînement (9) l'un de l'autre en termes d'entraînement,
**caractérisé en ce**
**qu'**un élément de butée (11) est associé à l'arbre d'entraînement (9), lequel élément de butée présente, du côté frontal, un contour de butée (22) tourné vers l'élément d'accouplement (14), lequel contour est configuré de telle sorte qu'une rotation relative de l'élément de butée (11) par rapport à l'élément d'accouplement (14) provoque un déplacement axial de l'élément d'accouplement (14).

2. Actionneur de châssis selon la revendication 1, **caractérisé en ce que** l'élément de butée (11) est fixé sur l'arbre d'entraînement (9).

3. Actionneur de châssis selon la revendication 2, **caractérisé en ce que** le contour de butée (22) formé sur l'élément de butée (11) est configuré de manière complémentaire à un contour de butée (23) qui est formé sur une surface de l'élément d'accouplement (14) tournée vers l'élément de butée (11).

4. Actionneur de châssis selon la revendication 2 ou 3, **caractérisé en ce que** le contour de butée (22) formé sur l'élément de butée (11) présente au moins un rehaussement axial (20) par rapport à son allure périphérique.

5. Actionneur de châssis selon la revendication 4, **caractérisé en ce que** l'au moins un rehaussement axial (20) descend dans les deux sens périphériques de la même manière jusqu'à un évidement axial (21).

6. Actionneur de châssis selon l'une des revendications précédentes, **caractérisé en ce qu'**une surface d'accouplement (18) frontale, tournée vers l'élément de sortie (15), de l'élément d'accouplement (14) est de forme conique.

7. Actionneur de châssis selon l'une des revendications précédentes, **caractérisé en ce que** l'élément d'accouplement (14) et l'élément de sortie (15) sont dotés respectivement d'une garniture d'accouplement (17, 18) au niveau de régions de surface tournées l'une vers l'autre, en particulier coniques.

8. Actionneur de châssis selon l'une des revendications précédentes, **caractérisé en ce que** l'élément de sortie (15) est monté sur l'arbre d'entraînement (9) de manière rotative, de préférence aussi légèrement déplaçable axialement, en particulier au moyen d'un palier à roulement (12).

9. Actionneur de châssis selon l'une des revendications précédentes, **caractérisé en ce qu'**un élément de friction conjugué (16) est disposé sur l'arbre d'entraînement (9), au niveau d'un côté de l'élément de sortie (15) opposé à l'élément d'accouplement (14), l'élément de friction conjugué (16) et l'élément de sortie (15) étant dotés respectivement d'une garniture d'accouplement (19, 17) au niveau de régions de surface tournées l'une vers l'autre, en particulier coniques.

10. Actionneur de châssis selon l'une des revendications précédentes, **caractérisé en ce que** l'élément de sortie (15) est une roue solaire ou une partie d'une roue solaire d'une transmission planétaire en particulier polyétagée.

11. Actionneur de châssis selon l'une des revendications précédentes, **caractérisé en ce que** des moyens (13) sont associés à l'élément d'accouplement (14), lesquels serrent axialement l'élément d'accouplement (14) par rapport à l'élément de sortie (15).

12. Actionneur de châssis selon l'une des revendications précédentes, **caractérisé en ce que** le dispositif d'accouplement (10) peut être commuté par une coopération mécanique d'un élément de butée (11) côté moteur avec un élément d'accouplement (14) de telle sorte que, lors du fonctionnement du moteur d'entraînement (8), l'état de transmission (état actif) soit présent et, en cas de moteur d'entraînement (8) au repos, l'état de désaccouplement (état passif) soit présent.

13. Actionneur de châssis selon l'une des revendications précédentes, **caractérisé en ce que** l'au moins un composant de châssis est deux parties (4a, 4b) d'une barre antiroulis réglable (1) qui, dans l'état de transmission de l'actionneur de châssis (6), peuvent être tournées l'une par rapport à l'autre autour d'un axe de rotation (5) au moyen de la chaîne cinématique.
